# EUROPEAN PATENT SPECIFICATION

(11) **EP 3 086 503 B1**
(45) Date of publication and mention of the grant of the patent: **06.06.2018**
(21) Application number: 15164808.6
(22) Date of filing: 23.04.2015
(51) Int. Cl.: H04L 9/00, H04L 9/06, G06F 11/07

(54) **FAULT DETECTION FOR SYSTEMS IMPLEMENTING A BLOCK CIPHER**
FEHLERERKENNUNG FÜR SYSTEME MIT BLOCKCHIFFRIERUNG
DÉTECTION DE DÉFAILLANCE POUR DES SYSTÈMES METTANT EN UVRE UN CRYPTAGE PAR BLOCS

(43) Date of publication of application: 26.10.2016
(73) Proprietor: Inside Secure, 13590 Meyreuil (FR)
(72) Inventor: Willemse, Gijs, 5658 AC EINDHOVEN (NL); Van Loon, Marcel, 5345 BA OSS (NL)
(74) Representative: de Jong, Jean Jacques

(56) References cited:
- TAKESHI SUGAWARA ET AL: "High-Performance Architecture for Concurrent Error Detection for AES Processors", IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E94.a, no. 10, 1 October 2011 (2011-10-01), pages 1971-1980, XP001570650, ISSN: 0916-8508, DOI: 10.1587/TRANSFUN.E94.A.1971 [retrieved on 2011-10-01]
- RAMESH KARRI ET AL: "Concurrent Error Detection Schemes for Fault-Based Side-Channel Cryptanalysis of Symmetric Block Ciphers", IEEE TRANSACTIONS ON COMPUTER AIDED DESIGN OF INTEGRATED CIRCUITS AND SYSTEMS, IEEE SERVICE CENTER, PISCATAWAY, NJ, US, vol. 21, no. 12, 1 December 2002 (2002-12-01), XP011070666, ISSN: 0278-0070
- KARRI R ET AL: "Concurrent error detection of fault-based side-channel cryptanalysis of 128-bit symmetric block ciphers", PROCEEDINGS OF THE 38TH. ANNUAL DESIGN AUTOMATION CONFERENCE. (DAC). LAS VEGAS, NV, JUNE 18 - 22, 2001; [PROCEEDINGS OF THE DESIGN AUTOMATION CONFERENCE], NEW YORK, NY : ACM, US, vol. CONF. 38, 18 June 2001 (2001-06-18), pages 579-584, XP010552454, DOI: 10.1145/378239.379027 ISBN: 978-1-58113-297-7

## Description

### Field

The present invention relates to encryption standards, and more specifically to a fault detection method in a system implementing a block cipher such as defined by the AES standard ("Advanced Encryption Standard").

### Background

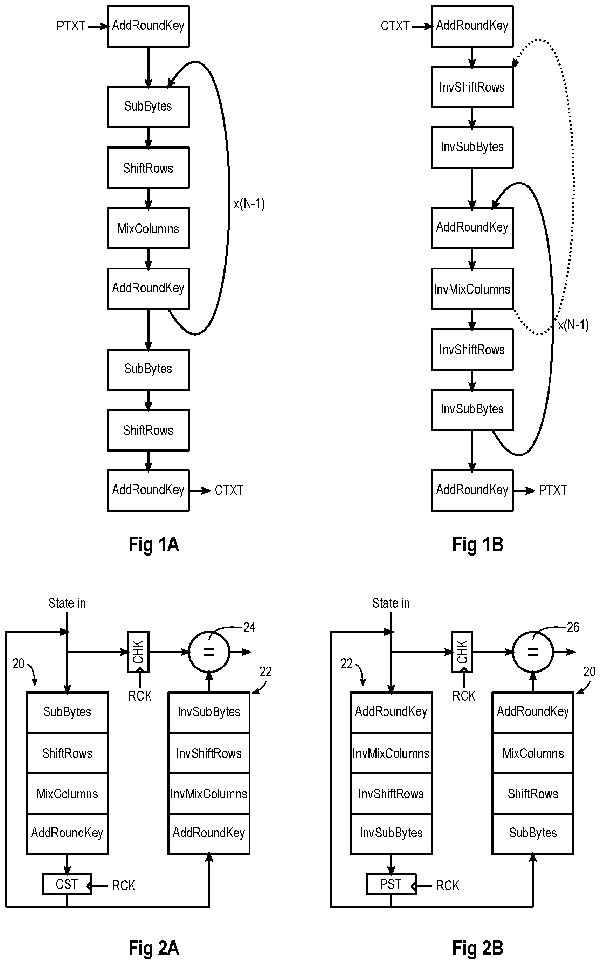

Figure 1A is a flowchart illustrating the operations involved in an encryption process or cipher according to the AES standard. The process takes a 128-bit word of "plaintext" PTXT and transforms it through sequential operations into a 128-bit word of "ciphertext" CTXT. The operations are performed on a two-dimensional array of bytes called the "state".

As depicted in figure 1A, the operations may be grouped in an initial round, a series of N-1 rounds of the same four sequential operations, and a final round, where N depends on the cipher key size. The cipher key may have a size of 128, 192 or 256 bits, yielding respective values 10, 12 or 14 for N.

Each round includes a sequential combination of the following four operations:
- AddRoundKey: a transformation in which a round key is added to the state using an exclusive-OR operation. A different round key is used in each round, taken from a key schedule derived from the cipher key.
- SubBytes: a transformation that processes the state using a non-linear byte substitution table (S-box) that operates on each of the state bytes independently.
- ShiftRows: a transformation that processes the state by cyclically shifting the last three rows of the state by different offsets.
- MixColumns: a transformation that takes all of the columns of the state and mixes their data (independently of one another) to produce new columns.

In figure 1A, the initial round includes one operation AddRoundKey. Follow N-1 rounds of the sequence of operations SubBytes, ShiftRows, MixColumns and AddRoundKey. The final round differs from the previous rounds by the omission of the MixColumns operation, i.e. it includes the sequence of operations SubBytes, ShiftRows and AddRoundKey.

Figure 1B is a flowchart illustrating the operations involved in a decryption process or inverse cipher according to the AES standard. The process takes a 128-bit word of ciphertext CTXT and transforms it through the reciprocal operations of the encryption process of figure 1A into a 128-bit word of plaintext PTXT.

Each of the operations of figure 1A is replaced in figure 1B by its reciprocal operation in reverse order. The reciprocal operations have the same labels as in figure 1A, prefixed by "Inv". The AddRoundKey operation is its own reciprocal.

Each of the processes of figures 1A and 1B is usually called a cipher calculation, or simply a cipher.

In some circumstances, there is a need to detect faults that may modify the result of the process. Such faults may be injected by an attacker in attempts to guess the cipher key, but can also happen due to a malfunction of the device, for example by single event upsets (SEU).

Straightforward fault detection techniques may be based on applying a cipher twice and comparing the results of the two ciphers. It is unlikely that a fault will affect the two cipher calculations in the same way, whereby a difference in the results will imply a fault. The second cipher may be calculated by duplicate hardware, effectively doubling the circuit surface area of the function, or by using the same hardware twice, effectively doubling the cipher calculation times. The publication "High-Performance Architecture for Concurrent Error Detection for AES Processors" by Sugawara et al., describes an error detection system for AES, wherein errors are detected for each round. After the subsequent shift-rows, sub-bytes, mix-columns and add round-key operation, the intermediate result is fed and provided to the respective reverse operations in the reverse order. The output of the reverse operations is then compared to the input of the round.

### Summary

A general fault detection method is provided herein for an encryption/decryption system based on a block cipher, comprising the steps of subjecting a state array to multiple rounds, each round comprising a same series of sequential operations transforming the state array; storing the state of a reference operation of a current round as a checkpoint state; storing the state of the reference operation in the next round as an intermediate state; applying one round of reciprocal operations to the intermediate state, starting from the reciprocal of the reference operation; and comparing the result state of said one round of reciprocal operations with the checkpoint state.

The method may comprise the steps of performing the rounds sequentially using a first hardware accelerator configured to carry out the operations of one round; and performing the round of reciprocal operations in parallel using a second hardware accelerator configured to carry out the reciprocal operations of one round.

Each round may comprise sequentially substituting bytes from the content of the state array; shifting rows; mixing columns; adding a round key; and writing the add round key result in the state array. The mentioned reference operation may then be shifting rows.

Each round may comprise sequentially inverse shifting rows from the content of the state array; inverse substituting bytes; adding a round key; inverse mixing columns; and writing the inverse mixing columns result in the state array. The mentioned reference operation may then be inverse substituting bytes.

The method may comprise the additional steps of generating and storing a reverse key from a cipher key using key expansions; applying reciprocal key expansions to the reverse key and comparing the result to the cipher key; and in each round, expanding a new round key from the cipher key and comparing the last round key to the stored key.

### Brief Description of Drawings

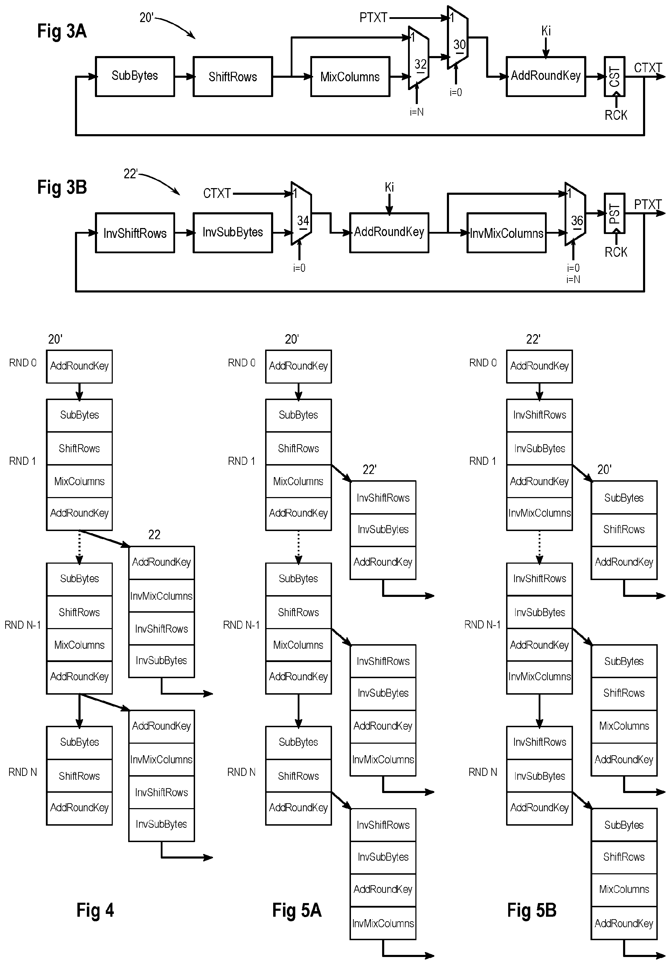

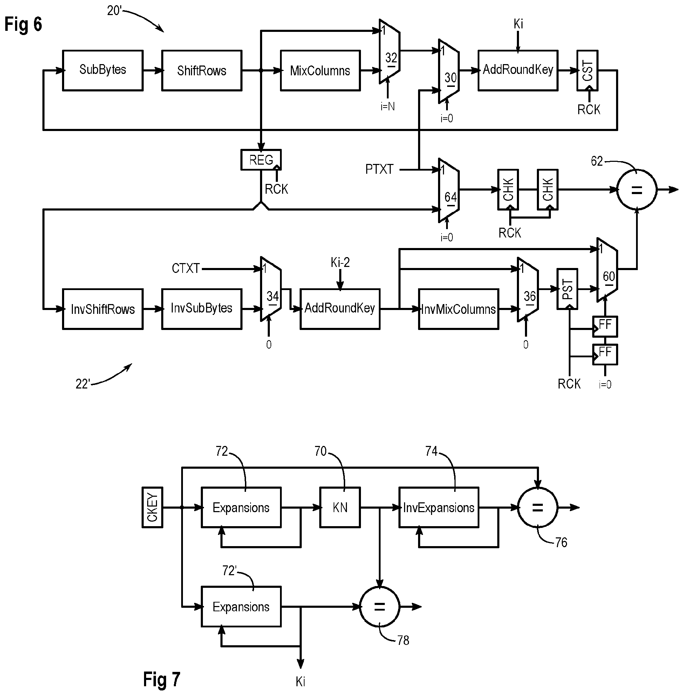

Other advantages and features will become more clearly apparent from the following description of particular embodiments of the invention provided for exemplary purposes only and represented in the appended drawings, in which:
▪ Figures 1A and 1B, previously described, are respective flowcharts of an AES cipher and an AES inverse cipher;
▪ Figures 2A and 2B are high-level block diagrams of respective hardware accelerators for carrying out the AES ciphers of figures 1A and 1B, including each an embodiment of fault detection hardware according to the invention;
▪ Figures 3A and 3B are more detailed block diagrams of respective exemplary hardware accelerators for integrally carrying out the AES ciphers of figures 1A and 1B;
▪ Figure 4 is an unrolled flowchart illustrating a straightforward operation possibility of the accelerator with fault detection of figure 2A;
▪ Figures 5A and 5B are unrolled flowcharts illustrating operation possibilities of the accelerators with fault detection of figures 2A and 2B, respectively, using the circuits of figures 3A and 3B;
▪ Figure 6 is a more detailed block diagram of an exemplary hardware accelerator including an embodiment of a fault detection circuit based on the accelerators of figures 3A and 3B; and
▪ Figure 7 is a block diagram of an embodiment of fault detection hardware for the AES key expansion process.

### Description of Embodiments

A fault detection approach as disclosed herein, for a system implementing a block cipher, is based on the assumption that the system implements bidirectional encrypted communication and will therefore implement the cipher and its inverse using separate hardware accelerators. In such a case, both accelerators are generally not active simultaneously. The idle hardware accelerator may then be used for detecting faults in the active hardware accelerator, as disclosed hereunder.

Figure 2A is a high-level block diagram of a hardware accelerator for carrying out the AES cipher of figure 1A, including an embodiment of a fault detection circuit using the accelerator for the inverse cipher of figure 1B. The accelerator may comprise four combinational logic circuit blocks 20 connected in cascade for carrying out in one clock cycle the four operations of the round loop of figure 1A, i.e. SubBytes, ShiftRows, MixColumns, and AddRoundKey. The ShiftRows operation may be performed in hardware by a fixed wire-routing pattern between the output of circuit SubBytes and the input of circuit MixColumns. The intermediate state of each round produced by circuit AddRoundKey may be stored in a register CST (Ciphertext STate) at the rhythm of a round clock RCK. The content of register CST may be used as the input state of the accelerator for the next round determined by clock RCK.

For detecting faults in the rounds implemented by the accelerator, the content of register CST may be fed in parallel to a series of combinational logic circuit blocks 22 configured for performing the reciprocal operations of the round within one clock cycle, i.e. AddRoundKey, InvMixColumns, InvShiftRows, and InvSubBytes. This reciprocal logic thus "undoes" the effect of the round by reproducing the input state of the round from the current output state of the round, provided both AddRoundKey operations use the same round key.

The input state of the accelerator is stored at each round as a checkpoint in a register CHK and is compared at 24 to the output state of the reciprocal logic 22.

If the output state of the reciprocal logic 22 and the checkpoint state don't match, then a fault occurred in the round in the accelerator, the reciprocal logic, or both. Comparator 24 signals this fault, whereby appropriate measures can be taken by further hardware or software.

Figure 2B is a high-level block diagram of a hardware accelerator for carrying out the AES inverse cipher of figure 1B, including an embodiment of a fault detection circuit using the accelerator for the cipher of figure 1A. The accelerator is in fact symmetrical to the accelerator of figure 2A in that the logic circuits 20 and 22 are exchanged. The logic circuit 22 is used for performing the rounds, whereas the logic circuit 20 is used for detecting faults in each round.

The intermediate state of each round is stored in a register designated by PST (Plaintext STate) instead of CST and the checkpoint state comparator is designated by 26.

It is apparent from figures 2A and 2B that the circuitry 20 for the encryption path may be reused for checking the circuitry 22 for the decryption path, and reciprocally. Therefore, in integrated circuits that implement bidirectional encrypted paths, fault detection in one path may be achieved by reusing idle hardware of the other path, i.e. at no extra hardware cost. The fault detection occurring in parallel with the rounds, there is no time cost either.

Figure 3A is a more detailed block diagram of an exemplary accelerator circuit 20' for integrally carrying out the AES encryption of figure 1A in N+1 cycles of clock RCK. Same labels designate same elements as in figure 2A. One or two multiplexers may be inserted in the circuit loop to perform the final (i=N), or initial (i=0) and final (i=N) rounds without duplicating AES functions. A first multiplexer 30 is configured to open the circuit loop and feed an input plaintext word PTXT to circuit AddRoundKey in the initial round (i=0). The second multiplexer 32 is configured to bypass circuit MixColumns in the final round (i=N). The AddRoundKey circuit receives a new round key Ki in each round i.

With this configuration, N+1 clock cycles after providing the input plaintext word PTXT, register CST contains the desired ciphertext word CTXT.

In an alternative embodiment, requiring only N clock cycles, the multiplexer 30 may be placed at the output of circuit AddRoundKey. The plaintext word PTXT is then provided to the multiplexer 30 through an additional AddRoundKey circuit.

Figure 3B is a more detailed block diagram of an exemplary accelerator circuit 22' for integrally carrying out the AES decryption of figure 1B in N+1 cycles of clock RCK. Same labels designate same elements as in figure 2B. In fact, the operations of logic circuit 22 are not performed in the same order as in figure 2B - the operations are reordered circularly to perform a modified version of the flow-chart of figure 1B, comprising N-1 rounds of a loop shown in dotted lines in figure 1B, i.e. InvShiftRows, InvSubBytes, AddRoundKey, and InvMixColumns.

One or two multiplexers may be inserted in the circuit loop to perform the final (i=N), or initial (i=0) and final (i=N) rounds without duplicating AES functions. A first multiplexer 34 is configured to open the circuit loop and feed an input ciphertext word CTXT to circuit AddRoundKey in the initial round (i=0). The second multiplexer 36 is configured to bypass circuit MixColumns in the initial and final rounds (i=0 and i=N). The AddRoundKey circuit receives a new round key Ki in each round i.

With this configuration, N+1 clock cycles after providing the input ciphertext word CTXT, register PST contains the desired plaintext word PTXT.

In an alternative embodiment, requiring only N clock cycles, the multiplexer 34 may be placed at the output of circuit AddRoundKey. The ciphertext word CTXT is then provided to the multiplexer 34 through an additional AddRoundKey circuit.

Figure 4 depicts the flowchart of figure 1A with its loop unrolled, together with the corresponding fault detection operations such as indicated in figure 2A. Each of rounds RND 1 to RND N-1 may be performed by circuit 20 and ends with the operation AddRoundKey, the result of which is stored in register CST to be used as the input for the next round. The reciprocal operations that may be performed by circuit 22 start from the content of register CST and continue in parallel with the operations of the next round.

All N+1 rounds depicted in figure 4, especially the initial round and the final round, may me performed integrally by the encryption accelerator 20' of figure 3A. However, the order of the operations of circuit 22 as shown in figure 4 may differ from the order of the operations performed by the actual decryption accelerator, which is the case if the decryption accelerator 22' of figure 3B were to be used.

Figure 5A is an unrolled flowchart similar to that of figure 4, illustrating alternative fault detection operations that may be performed using the actual decryption accelerator 22' of figure 3B. Instead of taking its input from register CST, i.e. the output of the AddRoundKey operation, circuit 22' takes its input from a selected reference operation that may be anywhere between the first and last operations of one round, for instance the ShiftRows operation. Thus, the fault detection rounds may not start in synchronization with the encryption rounds, which however does not affect the correct operation of the fault detection.

Figure 5B is an unrolled flowchart reciprocal to that of figure 5A, where the roles of the circuits 20' and 22' are exchanged to perform a decryption with fault checking.

Figure 6 is a more detailed block diagram of an exemplary hardware accelerator designed to implement the encryption operations of figure 5A using the accelerators of figures 3A and 3B. Moreover, this structure is configured to detect faults in all N+1 encryption rounds with minor hardware modifications to the circuits of figures 3A and 3B.

The encryption accelerator 20' is unchanged. The decryption accelerator 22' may be adapted for the fault detection needs with a multiplexer. In addition, some logic and registers may be used to compare the result. This logic can be reused in the reverse direction.. A first multiplexer, not shown, may be provided to connect the input of the circuit InvShiftRows to the output of circuit ShiftRows of accelerator 20' through a register REG. The register REG is clocked by signal RCK to store the intermediate state produced by circuit ShiftRows in each round. A multiplexer 60 is configured to select the output of the AddRoundKey circuit in the first round (i=0) and the output of register PST in the other rounds. The multiplexer 60 produces the re-calculated initial state to compare at 62 to the checkpoint state.

The checkpoint state is stored in two cascaded registers CHK clocked by signal RCK. An additional register CHK is provided in this configuration because the circuit 22' operates one round behind circuit 20'. A multiplexer 64 is configured to select the input plaintext word PTXT as the checkpoint state in the initial round (i=0). In the other rounds, the multiplexer 64 selects the content of register REG as the checkpoint state.

The multiplexers 34 and 36 present in circuit 22' for the decryption rounds are set in a fixed state forcing the use of all four available operations, i.e. connecting circuit InvSubBytes to circuit AddRoundKey, and not bypassing circuit InvMixColumns.

Since the circuit 22' operates two rounds behind the circuit 20', the AddRoundKey operation of circuit 22' uses a key two rounds behind (Ki-2), while the AddRoundKey operation of circuit 20' uses the current round key (Ki). For the same reasons, the multiplexer 60 is controlled with two rounds delay, as shown by two flip-flops FF at the control input of the multiplexer.

The final round of figure 5A only includes the AddRoundKey operation. The structure as shown in figure 6 does not detect faults in this last operation. If detecting faults is desired in this case, the content of register PST after the last loop iteration may be fed back into the circuit for the final round via the CTXT input of multiplexer 34, while multiplexer 36 is controlled to bypass circuit InvMixColumns.

The circuits of figures 3A and 3B may be similarly adapted to perform the decryption operations of figure 5B.

The choice of the operation from which the reciprocal path starts in each round for the fault detection (ShiftRows in figure 5A or InvSubBytes in figure 5B) may affect the critical paths when adapting circuits 20' and 22'. In some situations, the critical paths could be affected such that the circuitry does not provide results in time between two rounds. The exemplary choice of figures 5A and 5B and the corresponding circuit adaptation of figure 6 respect the critical paths.

Other configurations are possible that respect the critical paths, bearing in mind that the operations ShiftRows and InvShiftRows introduce no latency (they are performed by fixed wire routing).

The keys used by the AddRoundKey operations are changed using a cipher key expansion at each round of the cipher. The key expansion may also be subject to faults.

Figure 7 is a block diagram of an embodiment of fault detection hardware for the AES key expansion process. Conventionally a round key schedule is produced in N+1 expansion rounds of a cipher key CKEY. The keys in the schedule are then used sequentially in the N+1 rounds of the cipher. Each expansion round is recursive and may take place on the fly before the corresponding round of the cipher, or the key schedule may be produced integrally before the cipher rounds. Since the expansion rounds are recursive, a fault in one key produces faults in all the following keys, i.e. a fault in the last key may reflect a fault in the last key itself, or a fault in any of the other keys.

In order to detect faults in the key generation process, in a preliminary phase, the cipher key CKEY is subjected to a series of recursive expansions 72 to produce a last key KN after N rounds, also called reverse key. This key includes the last round key. The reverse key KN is stored in a register 70 and is subjected to a series of recursive inverse expansions 74. The inverse expansions normally produce the original key CKEY. This original key is compared at 76 to the key produced by the inverse expansions. If the keys don't match, the comparator 76 signals a fault.

To detect eventual corruptions during actual cipher operations, the round keys Ki are expanded in 72' on the fly, as they are needed in the cipher rounds. The key available after the last round, i.e. the reverse key is compared at 78 to the corresponding key KN stored in the register 70. If the keys don't match, the comparator 78 signals a fault.

In a decryption process, the operations may be similar. In figure 7, the expansions would be exchanged with the inverse expansions, and the cipher key CKEY would be exchanged with the reverse key KN.

## Claims

1. An encryption circuit based on a multiple-round block cipher, comprising:
an encryption accelerator (20') comprising, connected in a ring:
a substitute-bytes circuit,
a shift-rows circuit,
a mix-columns circuit,
an add round-key circuit,
a ciphertext register (CST) connected to store an output of the add round-key circuit at the rhythm of a round clock (RCK),
a first multiplexer (30) connected to insert a plaintext message in the ring in a first round, at an input of the add round-key circuit; **characterised by** a decryption accelerator (22') comprising, connected in series:
an inverse shift-rows circuit,
an inverse substitute-bytes circuit,
an add round-key circuit,
an inverse mix-columns circuit, and
a plaintext register (PST) connected to store an output of the inverse mix-columns circuit at the rhythm of the round clock (RCK);
an intermediate state register (REG) connected between an output of the shift-rows circuit and an input of the inverse shift-rows circuit, and clocked by the round clock;
a second multiplexer (60) connected to select an output of the add round-key circuit of the decryption accelerator in the first round, and an output of the plaintext register in the other rounds;
a third multiplexer (64) connected to select the plaintext message in the first round and an output of the intermediate state register (REG) in the other rounds;
a checkpoint state register (CHK) connected to store an output of the third multiplexer (64) at the rhythm of the round clock; and
a fault-detector (62) connected to check equality between an output of the second multiplexer (60) and an output of the checkpoint state register (CHK).

2. The circuit of claim 1, wherein:
a key (Ki) used by the add round-key circuit of the encryption accelerator is a key generated for a current encryption round;
a key (Ki-2) used by the add round-key circuit of the decryption accelerator is two rounds behind the key for the current encryption round;
the second multiplexer (60) operates two rounds behind the current encryption round; and
the output of the checkpoint state register (CHK) is delayed by one encryption round.

3. A fault detection method for an encryption system based on a block cipher, comprising the steps of:
subjecting a state array (CST) to multiple rounds, each round comprising sequentially:
substituting bytes from the content of the state array,
shifting rows,
mixing columns,
adding a round key,
writing the add round key result in the state array;
storing the state of the shifting rows operation of a current round as a checkpoint state (CHK);
storing the state of the shifting rows operation in the next round as an intermediate state (REG);
applying one round of reciprocal operations to the intermediate state, starting from an inverse shifting rows operation; and
comparing (62) a result state of said one round of reciprocal operations with the checkpoint state.

4. A fault detection method for a decryption system based on a block cipher, comprising the steps of:
subjecting a state array (PST) to multiple rounds, each round comprising sequentially:
inverse shifting rows from a content of the state array,
inverse substituting bytes,
adding a round key,
inverse mixing columns;
writing the inverse mixing columns result in the state array;
storing the state of the inverse substituting bytes operation of a current round as a checkpoint state (CHK);
storing the state of the inverse substituting bytes operation in the next round as an intermediate state (REG);
applying one round of reciprocal operations to the intermediate state, starting from a substituting bytes operation; and
comparing (62) a result state of said one round of reciprocal operations with the checkpoint state.

5. The method of claim 3, comprising the steps of:
generating and storing a reverse key (KN) from a cipher key (CKEY) using key expansions;
applying reciprocal key expansions to the reverse key and comparing (76) the result to the cipher key; and
in each round, expanding a new round key (Ki) from the cipher key and comparing (78) the last round key to the stored key.

6. The method of claim 4, comprising the steps of:
generating and storing a reverse key (KN) from a cipher key (CKEY) using key expansions;
applying reciprocal key expansions to the reverse key and comparing (76) the result to the cipher key; and
in each round, expanding a new round key (Ki) from the cipher key and comparing (78) the last round key to the stored key.

## Patentansprüche

1. Verschlüsselungsschaltkreis auf Basis einer Blockverschlüsselung in mehreren Runden, umfassend:
einen Verschlüsselungsbeschleuniger (20'), umfassend, in einen Ring geschaltet:
einen Bytes-Substitutions-Schaltkreis (Substitute-Bytes),
einen Zeilen-Verschiebungs-Schaltkreis (Shift-Rows),
einen Spalten-Mischungs-Schaltkreis (Mix-Columns),
einen Rundenschlüssel-Hinzufügungs-Schaltkreis (Add-Round-Key),
ein Chiffratregister (Ciphertext-Register, CST), das geschaltet ist, um einen Ausgang des Add-Round-Key-Schaltkreises im Rhythmus eines Rundentakts (Round-Clock, RCK) zu speichern,
einen ersten Multiplexer (30), der geschaltet ist, um eine Klartextmeldung in dem Ring in einer ersten Runde an einem Eingang des Add-Round-Key-Schaltkreises einzugeben;
**gekennzeichnet durch**
einen Entschlüsselungsbeschleuniger (22'), umfassend, in Reihe geschaltet:
einen inversen Shift-Rows-Schaltkreis,
einen inversen Substitute-Bytes-Schaltkreis,
einen Add-Round-Key-Schaltkreis,
einen inversen Mix-Columns-Schaltkreis und
ein Klartextregister (Plaintext-Register, PST), das geschaltet ist, um einen Ausgang des inversen Mix-Columns-Schaltkreises im Rhythmus des Rundentakts (RCK) zu speichern;
ein Zwischenzustandsregister (Intermediate-State-Register, REG), das zwischen einen Ausgang des Shift-Rows-Schaltkreises und einen Eingang des inversen Shift-Rows-Schaltkreises geschaltet ist und durch den Rundentakt getaktet wird;
einen zweiten Multiplexer (60), der geschaltet ist, um einen Ausgang des Add-Round-Key-Schaltkreises des Entschlüsselungsbeschleunigers in der ersten Runde und einen Ausgang des Klartextregisters in den anderen Runden auszuwählen;
einen dritten Multiplexer (64), der geschaltet ist, um die Klartextmeldung in der ersten Runde und einen Ausgang des Zwischenzustandsregisters (REG) in den anderen Runden auszuwählen;
ein Prüfpunktzustandsregister (Checkpoint-State-Register, CHK), das geschaltet ist, um einen Ausgang des dritten Multiplexers (64) im Rhythmus des Rundentakts zu speichern;
und
einen Fehlerdetektor (62), der geschaltet ist, um die Übereinstimmung zwischen einem Ausgang des zweiten Multiplexers (60) und einem Ausgang des Prüfpunktzustandsregisters (CHK) zu überprüfen.

2. Schaltkreis nach Anspruch 1, wobei:
ein von dem Add-Round-Key-Schaltkreis des Verschlüsselungsbeschleunigers verwendeter Schlüssel (Ki) ein für eine aktuelle Verschlüsselungsrunde erzeugter Schlüssel ist;
ein von dem Add-Round-Key-Schaltkreis des Entschlüsselungsbeschleunigers verwendeter Schlüssel (Ki-2) zwei Runden hinter dem Schlüssel für die aktuelle Verschlüsselungsrunde liegt;
der zweite Multiplexer (60) zwei Runden hinter der aktuellen Verschlüsselungsrunde arbeitet; und
der Ausgang des Prüfpunktszustandsregisters (CHK) um eine Verschlüsselungsrunde verzögert ist.

3. Fehlererkennungsverfahren für ein Verschlüsselungssystem auf Basis einer Blockverschlüsselung, umfassend die folgenden Schritte:
Ausführen von mehreren Runden an einem State-Array (CST), wobei jede Runde nacheinander Folgendes umfasst:
Substituieren von Bytes aus dem Inhalt des State-Arrays,
Verschieben von Zeilen,
Mischen von Spalten,
Hinzufügen eines Rundenschlüssels,
Schreiben des Ergebnisses des Hinzufügens des Rundenschlüssels in das State-Array;
Speichern des Zustands des Vorgangs des Verschiebens von Zeilen einer aktuellen Runde als Prüfpunktzustand (CHK);
Speichern des Zustands des Vorgangs des Verschiebens von Zeilen in der nächsten Runde als Zwischenzustand (REG);
Anwenden einer Runde von reziproken Vorgängen auf den Zwischenzustand, beginnend mit einem inversen Vorgang des Verschiebens von Zeilen; und
Vergleichen (62) eines Ergebniszustands der einen Runde von reziproken Vorgängen mit dem Prüfpunktzustand.

4. Fehlererkennungsverfahren für ein Entschlüsselungssystem auf Basis einer Blockverschlüsselung, umfassend die folgenden Schritte:
Ausführen von mehreren Runden an einem State-Array (PST), wobei jede Runde nacheinander Folgendes umfasst:
inverses Verschieben von Zeilen aus einem Inhalt des State-Arrays,
inverses Substituieren von Bytes,
Hinzufügen eines Rundenschlüssels,
inverses Mischen von Spalten,
Schreiben des inversen Ergebnisses des Mischens von Spalten in das State-Array;
Speichern des Zustands des inversen Vorgangs des Substituierens von Bytes einer aktuellen Runde als Prüfpunktzustand (CHK);
Speichern des Zustands des inversen Vorgangs des Substituierens von Bytes in der nächsten Runde als Zwischenzustand (REG);
Anwenden einer Runde von reziproken Vorgängen auf den Zwischenzustand, beginnend mit einem Vorgang des Substituierens von Bytes; und
Vergleichen (62) eines Ergebniszustands der einen Runde von reziproken Vorgängen mit dem Prüfpunktzustand.

5. Verfahren nach Anspruch 3, umfassend die folgenden Schritte:
Erzeugen und Speichern eines Umkehrschlüssels (Reverse-Key, KN) von einem Chiffrierschlüssel (Cipherkey, CKEY) unter Verwendung von Schlüsselerweiterungen;
Anwenden von reziproken Schlüsselerweiterungen auf den Umkehrschlüssel und Vergleichen (76) des Ergebnisses mit dem Chiffrierschlüssel; und
in jeder Runde Erweitern eines neuen Rundenschlüssels (Ki) von dem Chiffrierschlüssel und Vergleichen (78) des letzten Rundenschlüssels mit dem gespeicherten Schlüssel.

6. Verfahren nach Anspruch 4, umfassend die folgenden Schritte:
Erzeugen und Speichern eines Umkehrschlüssels (KN) von einem Chiffrierschlüssel (CKEY) unter Verwendung von Schlüsselerweiterungen;
Anwenden von reziproken Schlüsselerweiterungen auf den Umkehrschlüssel und Vergleichen (76) des Ergebnisses mit dem Chiffrierschlüssel; und
in jeder Runde Erweitern eines neuen Rundenschlüssels (Ki) von dem Chiffrierschlüssel und Vergleichen (78) des letzten Rundenschlüssels mit dem gespeicherten Schlüssel.

## Revendications

1. Circuit de chiffrement basé sur un chiffrement par bloc à plusieurs tours, ledit circuit comprenant :
un accélérateur de chiffrement (20') comprenant selon un montage en anneau :
un circuit de substitution d'octets,
un circuit de décalage de rangées,
un circuit de mélange de colonnes,
un circuit d'ajout de clé de tour,
un registre de texte chiffré (CST) connecté pour stocker une sortie du circuit d'ajout de clé de tour au rythme d'une horloge de tour (RCK),
un premier multiplexeur (30) connecté pour insérer un message de texte en clair dans l'anneau dans un premier tour, au niveau d'une entrée du circuit d'ajout de clé de tour ;
**caractérisé par**
un accélérateur de déchiffrement (22') comprenant en série :
un circuit de décalage inverse de rangées,
un circuit de substitution inverse d'octets,
un circuit d'ajout de clé de tour,
un circuit de mélange inverse de colonnes, et
un registre de texte en clair (PST) connecté pour stocker une sortie du circuit de mélange inverse de colonnes au rythme de l'horloge de tour (RCK) ;
un registre d'état intermédiaire (REG) connecté entre une sortie du circuit de décalage de rangées et une entrée du circuit de décalage inverse de rangées, et cadencé par l'horloge de tour ;
un deuxième multiplexeur (60) connecté pour sélectionner une sortie du circuit d'ajout de clé de tour de l'accélérateur de déchiffrement dans le premier tour, et une sortie du registre de texte en clair dans les autres tours ;
un troisième multiplexeur (64) connecté pour sélectionner le message de texte en clair dans le premier tour et une sortie du registre d'état intermédiaire (REG) dans les autres tours ;
un registre d'état de point de contrôle (CHK) connecté pour stocker une sortie du troisième multiplexeur (64) au rythme de l'horloge de tour ; et
un détecteur de défaut (62) connecté pour contrôler l'égalité entre une sortie du deuxième multiplexeur (60) et une sortie du registre d'état de point de contrôle (CHK).

2. Circuit selon la revendication 1, dans lequel :
une clé (Ki) utilisée par le circuit d'ajout de clé de tour de l'accélérateur de chiffrement est une clé générée pour un tour de chiffrement en cours ;
une clé (Ki-2) utilisée par le circuit d'ajout de clé de tour de l'accélérateur de déchiffrement est située deux tours derrière la clé pour le tour de chiffrement en cours ;
le deuxième multiplexeur (60) fonctionne deux tours derrière le tour de chiffrement en cours ; et
la sortie du registre d'état de point de contrôle (CHK) est retardée d'un tour de chiffrement.

3. Procédé de détection de défaut d'un système de chiffrement sur la base d'un chiffrement par bloc, le procédé comprenant les étapes suivantes :
la soumission d'un tableau d'états (CST) à plusieurs tours, chaque tour comprenant séquentiellement :
la substitution d'octets provenant du contenu du tableau d'état,
le décalage de rangées,
le mélange de colonnes,
l'ajout d'une clé de tour,
l'écriture du résultat de l'ajout d'une clé de tour dans le tableau d'états ;
la mémorisation de l'état de l'opération de décalage de rangées d'un tour en cours en tant qu'état de point de contrôle (CHK) ;
la mémorisation de l'état de l'opération de décalage de rangées dans le tour suivant en tant qu'état intermédiaire (REG) ;
l'application d'un tour d'opérations réciproques à l'état intermédiaire, à partir d'une opération de décalage de rangées inverse ; et
la comparaison (62) d'un état de résultat dudit un tour d'opérations réciproques avec l'état de point de contrôle.

4. Procédé de détection de défaut d'un système de déchiffrement sur la base d'un chiffrement par bloc, le procédé comprenant les étapes suivantes :
la soumission d'un tableau d'états (PST) à plusieurs tours, chaque tour comprenant séquentiellement :
le décalage inverse de rangées par rapport à un contenu du tableau d'états,
la substitution inverse d'octets,
l'ajout d'une clé de tour.
le mélange inverse de colonnes ;
l'écriture du résultat de mélange inverse de colonnes dans le tableau d'états ;
la mémorisation de l'état de l'opération de substitution inverse d'octets d'un tour en cours en tant qu'état de point de contrôle (CHK) ;
la mémorisation de l'état de l'opération inverse de substitution d'octets dans le tour suivant en tant qu'état intermédiaire (REG) ;
l'application d'un tour d'opérations réciproques à l'état intermédiaire, à partir d'une opération de substitution d'octets ; et
la comparaison (62) d'un état de résultat dudit un tour d'opérations réciproques avec l'état de point de contrôle.

5. Procédé selon la revendication 3, comprenant les étapes suivantes :
la génération et le stockage d'une clé inverse (KN) à partir d'une clé de chiffrement (CKEY) à l'aide d'extensions de clé ;
l'application d'extensions de clés réciproques à la clé inverse et la comparaison (76) du résultat avec la clé de chiffrement ; et
à chaque tour, l'extension d'une nouvelle clé de tour (Ki) à partir de la clé de chiffrement et la comparaison (78) de la dernière clé de tour avec la clé stockée.

6. Procédé selon la revendication 4, comprenant les étapes suivantes :
la génération et le stockage d'une clé inverse (KN) à partir d'une clé de chiffrement (CKEY) à l'aide d'extensions de clé ;
l'application d'extensions de clés réciproques à la clé inverse et la comparaison (76) du résultat avec la clé de chiffrement ; et
à chaque tour, l'extension d'une nouvelle clé de tour (Ki) à partir de la clé de chiffrement et la comparaison (78) de la dernière clé de tour avec la clé stockée.
